# EUROPEAN PATENT APPLICATION

(11) **EP 2 597 738 A1**
(43) Date of publication of application: **29.05.2013**
(21) Application number: 11190139.3
(22) Date of filing: 22.11.2011
(51) Int. Cl.: H02G 1/10, H02G 9/02

(54) **Method for mounting electrical cable and cable protection apparatus to support**

(71) Applicant: Seven Eighty X Limited, Darlington, Durham DL1 2PB (GB)
(72) Inventor: Pearce, Colin Richard, Stokesley North Yorkshire TS9 5QA (GB); Farrely, Justin Nicholas, Carrollton Texas 75010 (US)
(74) Representative: Vinsome, Rex Martin

(57) **Abstract**

A method of mounting an electrical cable (28) to a support structure (2) of an offshore electricity generating apparatus is disclosed. The method comprises mounting a cable protection apparatus (30) to an external surface of the support structure, wherein the cable protection apparatus comprises a plurality of first elements interconnected to define a channel for receiving the cable, wherein each first element is prevented from pivoting through more than a predetermined angle relative to a further first element attached thereto. The cable protection apparatus is mounted to the electrical cable such that the cable protection apparatus prevents the cable being bent around a bend radius smaller than a predetermined minimum bend radius and the cable protrudes from a lower end of the cable protection apparatus when mounted to the support structure.

## Description

The present invention relates to a method for mounting an electrical cable and electrical cable protecting apparatus to a support of an offshore electricity generating apparatus. The invention also relates to an apparatus for protecting an electrical cable.

Offshore wind turbine farms generally comprise several wind turbines connected in a line or string to a central power collection platform, where the power is summed and the combined power voltage boosted through large transformers to a higher distribution level voltage for onward transmission via dedicated export cables.

The electrical interconnection of offshore wind turbines is typically carried out by means of a spur arrangement with each turbine connected to another turbine on either side (except for turbines at the end of the spur or adjacent to the central power collection platform). In some cases, the end of the spur may also be reconnected back to the transformer platform to form a closed loop for added redundancy. Electrical interconnection between adjacent wind turbines is made by means of intra array cables, typically 500 metres to 1,200 metres in length, and connection from the transformer platform to the shore is carried out by a cable known as an export cable, typically several kilometres or tens of kilometres in length.

Existing intra array cables are typically laid from a large vessel or barge moored within the array of wind turbines. The offshore wind turbine is supported by a foundation embedded in the sea bed and a transition piece mounted to the foundation, and which are installed prior to the cable laying process, which itself may be before, after or at the same time as the turbine installation. The turbine foundation is typically a monopile construction and is piled or hammered into the seabed by means of a large dedicated vessel. The foundation has a J-tube or I-tube preinstalled within it in order to safely guide a power cable from the sea floor up to the transition piece or a platform level and to provide the cable with protection. The J-tube or I-tube is provided with a messenger wire preinstalled within it and which is secured in the base of the foundation and extends to the top of the I-tube or J-tube and which is subsequently used to pull the power cable up through the J-tube or I-tube into the secure environment within the transmission piece for onward connection to the wind turbine generator itself.

When the vessel such as a cable lay ship arrives to install the intra array cable, the end of the messenger wire is retrieved by means of a diver or remotely operated vehicle (ROV) and taken to the rear deck of the ship where it is connected to the power cable. The other end of the messenger wire, which runs up through the I-tube or J-tube, is then connected to a winch on the vessel via a pulley system vertically above the I-tube or J-tube and the messenger wire with power cable attached to it is then pulled through the I-tube or J-tube to the top of the transition piece, where it is secured mechanically and subsequently electrically connected. The vessel then lays the cable towards the next turbine foundation, leaving some slack cable on the seabed, and repeats the process to install the second cable end in the second turbine. The cable lying on the seabed is then buried for protection by means of ploughing, water jetting, rock cutting, rock dumping, mattressing or other similar processes carried out by means of either a surface vessel or a dedicated ROV and which will be familiar to persons skilled in the art.

The known technique described above suffers from a number of drawbacks. Firstly, depending on the site characteristics, the cable burying technique employed, the foundation design, the installation process and other related factors, there may be an area of exposed cable between the base of the J-tube or I-tube and the start of buried location. Such exposed cable is likely to be a future failure point for the cable through fatigue associated with water motion, and additional cable protection therefore needs to be added to that section of the cable before it is pulled through the J-tube or I-tube. In addition, the cable and/or additional cable protection equipment can become snagged on the mouth of the J-tube or I-tube, resulting in damage to the cable and/or J-tube or I-tube and requiring repair by divers or ROVs. Also, the existing process, in which the cable entry point into the turbine support is located near the seabed, requires monitoring and often intervention at that point as a result of the difficulty of remotely controlling such an operation in potentially dirty conditions with wave and current action applying. Furthermore, monopile foundations may be inserted deeper than planned into the seabed, therefore forcing the J-tube or I-tube mouth into sediment and/or rock and damaging it in the process. This in turn requires remedial action by divers or ROVs. Alternatively, the monopile foundation may be embedded to a lesser extent than anticipated, as a result of which significant amounts of cable may be left exposed and unsupported, which in turn requires significant remedial measures to minimise the risk of cable damage. Furthermore, in conventional cable lay systems, the cables are generally pre-cut on shore and then stored in a preferred order or deployment on a ship. If any problems should occur with the cable, there is generally no replacement available on the ship, and it is difficult to access cables other than in the pre-planned sequence, thereby causing significant obstacles to the cable laying process.

The use of J- or I-tubes and a cable entry location below sea level also gives rise to the problem that because foundations may be installed up to a year in advance of the cable lay operation, the J- or I-tubes can become obstructed by marine growth and/or the messenger wires can become corroded, thereby making cable installation difficult. Also, the provision of a cable entry point below sea level requires the use of divers and/or remotely operated vehicles (ROVs), thereby making the process potentially more hazardous to personnel and more difficult to carry out.

Preferred embodiments of the present invention seek to overcome one or more of the above disadvantages of the prior art.

According to an aspect of the present invention, there is provided a method of mounting an electrical cable to a support structure of a first offshore electricity generating apparatus, the method comprising:-
mounting a first cable protection apparatus to an external surface of said support structure, wherein said first cable protection apparatus comprises a plurality of first elements interconnected to define a channel for receiving a cable, wherein each said first element is prevented from pivoting through more than a predetermined angle relative to a further said first element attached thereto; and
mounting said first cable protection apparatus to an electrical cable such that said cable protection apparatus prevents said cable being bent around a bend radius smaller than a predetermined minimum bend radius and said cable protrudes from a lower end of first cable protection apparatus when mounted to said support structure.

By mounting a first cable protection apparatus to an external surface of a support structure, this provides the advantage of avoiding the need for an inlet aperture at the lower part of the support structure (i.e. below sea level), thereby minimising the risk of damage to the cable and the risk of incorrect location of the aperture relative to the sea floor. The problems caused by obstruction of a J- or I-tube by marine growth or corrosion of messenger wires are avoided. In addition, the mounting of the cable to the first cable protection apparatus can be carried out on a vessel prior to installation, as a result of which the cable installation process is simplified and safety to personnel carrying out installation increased. In particular, by avoiding the provision of an underwater cable entry location, the use of divers and ROVs can be avoided. The present invention also enables damaged cables to be replaced more easily.

At least one said first cable protection apparatus may be fixed to said cable at at least one location along the length of said cable.

The step of mounting the first cable protection apparatus to the cable may comprise mounting an end of the cable to a guide member located in said channel of the first cable protection apparatus and pulling the cable into the first cable protection apparatus by means of the guide member.

This provides the advantage of simplifying the process of installing the cable by enabling the cable to be attached to the guide member at sea surface level.

The step of mounting the first cable protection apparatus to the cable may be carried out subsequently to mounting of the first cable protection apparatus to the external surface of the support structure.

The step of mounting the first cable protection apparatus to an external service of said support structure may comprise mounting said first cable protection apparatus to locating means provided on the external surface of the support structure.

Said locating means may comprise at least one elongate member for slidably receiving the cable protection apparatus.

The method may further comprise mounting at least one second cable protection apparatus to an end of said first cable protection apparatus, wherein said second cable protection apparatus is adapted to extend from a lower end of the first cable protection apparatus when mounted to said support structure and prevent said cable being bent around a bend radius smaller than a predetermined minimum bend radius.

This provides the advantage of minimising the risk of damage to the length of cable protruding from the base of the support structure and extending from the base of the support structure to the adjacent sea floor.

The method may further comprise moving said first cable protection apparatus and said second cable protection apparatus relative to said support structure such that said second cable protection apparatus engages the sea floor.

This provides the advantage of enabling the cable to be more accurately located relative to the support structure to minimise stress on the cable in its final location.

The method may further comprise mounting at least one third cable protection apparatus to a second support structure such that said cable protrudes from a lower end of said third cable protection apparatus, and laying a length of said cable on the sea floor between said first and second support structures.

The method may further comprise burying said length of cable.

The step of laying a length of said cable on the sea floor between said first and second support structures may comprise lowering a remotely operated vehicle to the sea floor, and laying said length of cable by means of said remotely operated vehicle.

The method may further comprise mounting at least one flotation device to an end of said cable.

This provides the advantage of facilitating location of the end of the cable for connection to further apparatus.

According to another aspect of the present invention, there is provided a cable protection apparatus comprising:-
a plurality of first elements adapted to be interconnected to define a channel for receiving a cable and such that relative angular movement of each said first element relative to the or each said further first element connected thereto is limited; and
closure means for closing said channel with said cable therein.

By providing a plurality of first elements forming a channel for receiving a cable and closure means for closing the channel, this provides the advantage of enabling the cable protection apparatus to be assembled around the cable, thereby making assembly easier.

The apparatus may further comprise engaging means for engaging locating means on an external surface of a support structure of an offshore wind generating apparatus.

At least one said first element may comprise at least one respective protrusion for engaging a respective recess on a further said first element, and at least one respective recess for engaging a respective protrusion on a further said first element, wherein engagement of said protrusion and/or recess with a corresponding said recess and/or protrusion limits pivoting movement of said first element relative to a said further first element.

The closure means may comprise a plurality of second elements adapted to be interconnected wherein each said second element is adapted to engage a respective said first element.

The closure means may further comprise stiffening means adapted to resist pivoting of at least one said second element relative to at least one further said second element connected thereto when said second element and said further second element are vertically aligned with each other.

This provides the advantage of providing further protection to the cable when mounted to the external surface of the support structure.

The stiffening means may comprise a plurality of third elements wherein each said third element is movably mounted to a respective said second element between a respective first position, in which said third element allows pivoting movement of said second element relative to a further said second element connected thereto, and a respective second position, in which said third element engages said second element and said further second element to prevent pivoting movement of said second element relative to said further second element.

At least one said second element may comprise at least one respective protrusion for engaging a respective recess on a further said second element, and at least one respective recess for engaging a respective protrusion on a further said second element, wherein engagement of said protrusion and/or recess with a corresponding said recess and/or protrusion limits pivoting movement of said second element relative to a said further second element.

The apparatus may further comprise clamping means for clamping armour of a cable therebetween to secure the cable relative to the apparatus.

Preferred embodiments of the invention will now be described, by way of example only and not in any limitative sense, with reference to the accompanying drawings, in which:-
Figure 1 shows a pair of monopile supports and transition pieces for supporting offshore electricity generating turbine apparatus;
Figure 2 shows a vessel mounting a first cable protection apparatus to a transition piece of one of the supports of Figure 1 by means of a method embodying the present invention;
Figure 3 shows the arrangement of Figure 2 after mounting of the first cable protection device to an external surface of the support;
Figure 4 shows the vessel of Figure 2 mounting a further cable protection apparatus to an external surface of the second support of Figure 1;
Figure 5 shows an alternative example of a method of mounting the cable and cable protection device to the second support of Figure 1;
Figures 6A and 6A show a detailed view of steps in the installation of a first embodiment of the lower part of the arrangement of Figure 3;
Figures 6C and 6D show a detailed view of steps in the installation of a second embodiment of the lower part of the arrangement of Figure 3;
Figures 7A to 7C show the deployment of a remotely operated vehicle (ROV) for burial of a length of cable between the first and second supports of Figure 1;
Figure 8 shows an alternative arrangement for deployment of a length of cable between the first and second supports of Figure 1;
Figure 9 shows the arrangement of Figure 8 at a later stage in the cable laying process;
Figures 10A and 10B show a detailed view of the installation of the lower part of the cable protection device of Figure 5;
Figure 11A is a side view of a cable protection apparatus embodying the present invention;
Figure 11B is a cross sectional side view of part of the cable protection apparatus of Figure 11A;
Figure 11C is a cross sectional plan view of the part of the cable protection apparatus of Figure 11B;
Figure 11D is an exploded cross sectional plan view of the part of the cable protection apparatus of Figure 11B;
Figure 11E is a rear view of the part of the cable protection apparatus of Figure 11A;
Figure 11F(i) is a rear view of a back plate of the part of the cable protection apparatus of Figure 11B in a first position;
Figure 11G(i) is a rear view of a back plate of the part of the cable protection apparatus of Figure 11B in a second position;

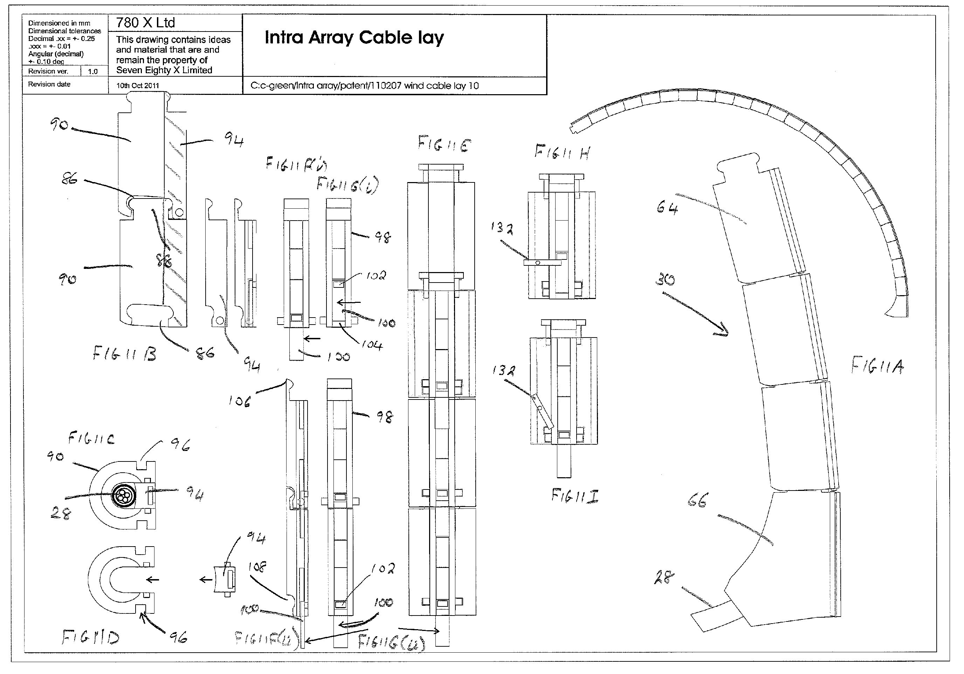

Figure 11F(ii) is a side view of two interconnected back plates of the part of the cable protection apparatus of Figure 11B in a first position;
Figure 11G(ii) is a rear view of two interconnected back plates of the part of the cable protection apparatus of Figure 11B in a second position;
Figure 11H is a rear view of an element of the part of the cable protection apparatus of Figure 11B in a first position;
Figure 11I is a rear view of an element of the part of the cable protection apparatus of Figure 11B in a second position;

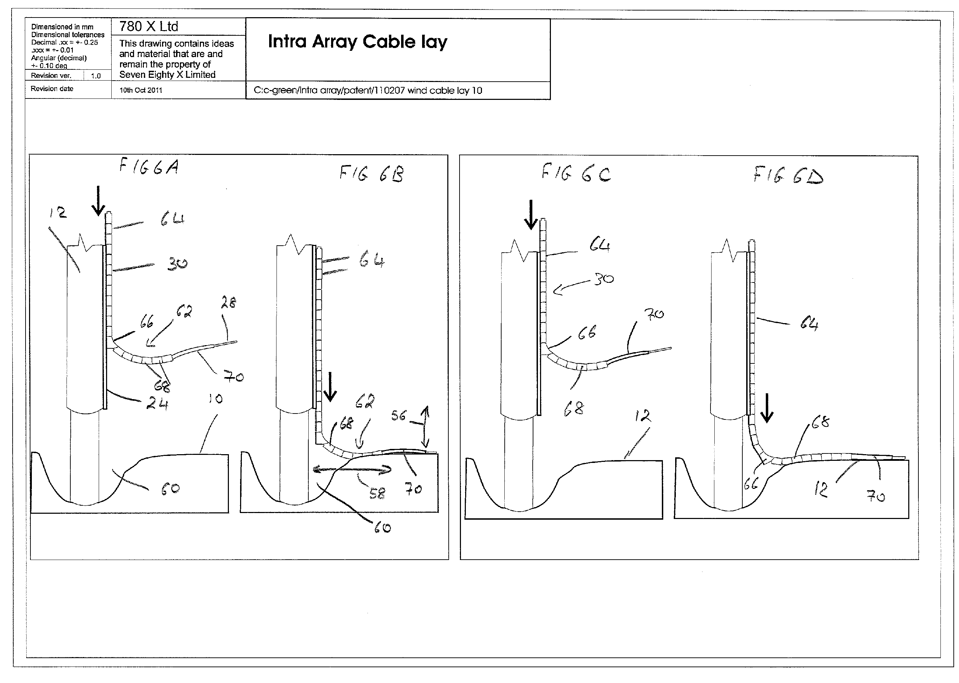

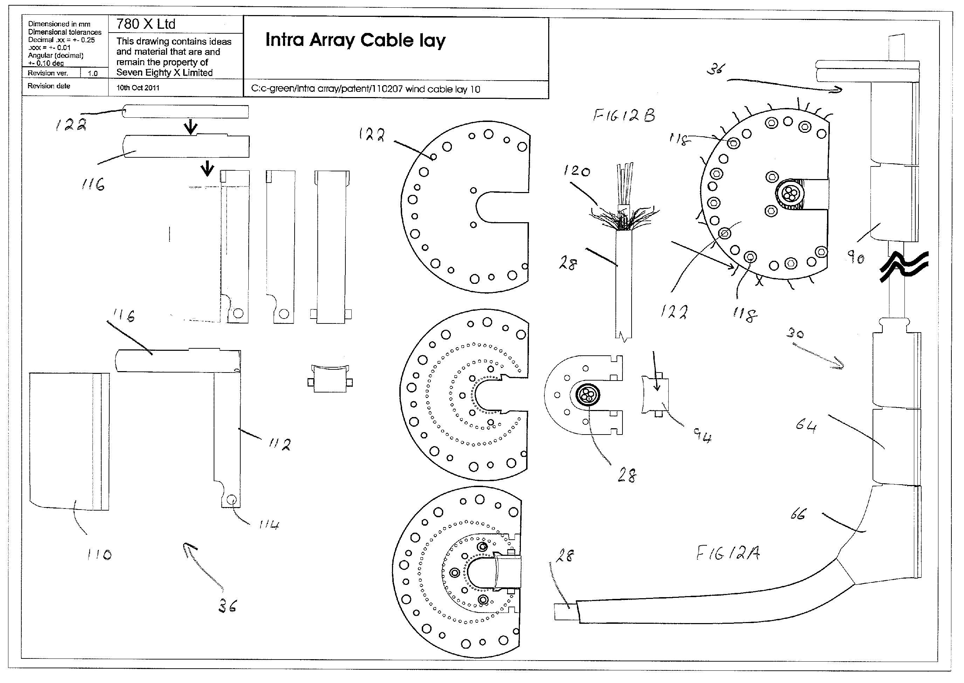

Figure 12A is a schematic view of the end regions of the cable protection apparatus of Figures 6A to 6D;
Figure 12B is a top view of a top hat element of the cable protection device of Figure 12A;

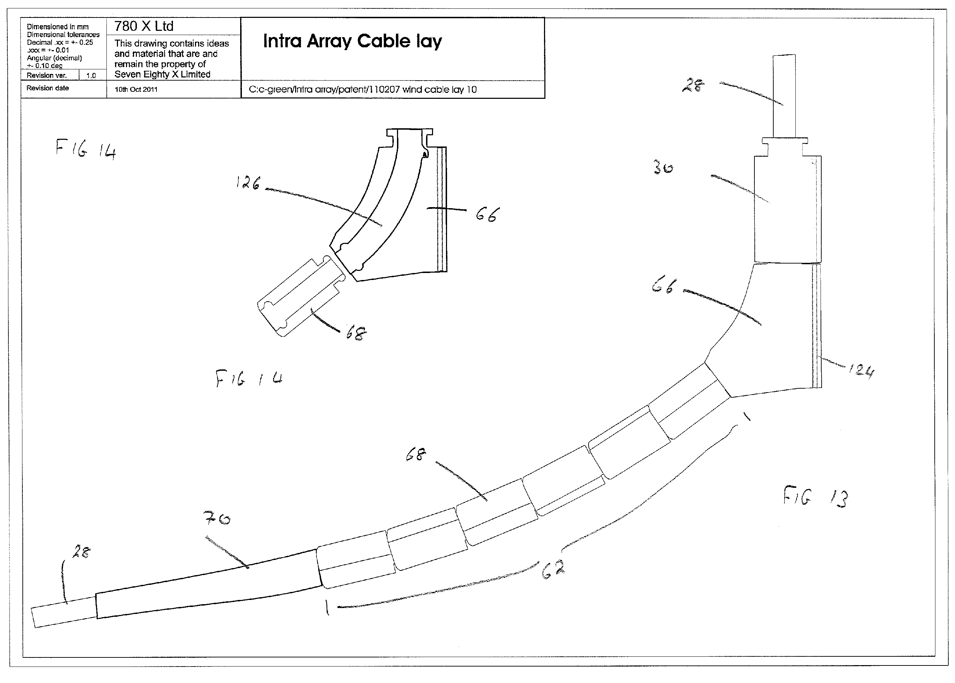

Figure 13 is a detailed side view of the lower part of the cable protection device of Figure 12A;
Figure 14 is a detailed side view of part of the arrangement of Figure 13; and

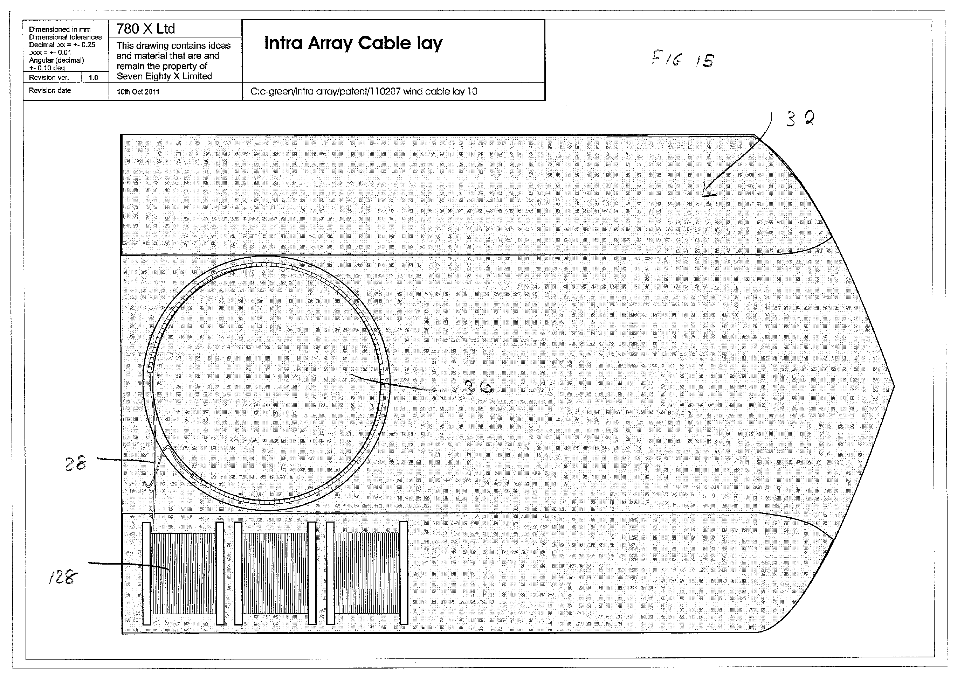

Figure 15 shows the arrangement of cable and cable protection device on a vessel for installation.

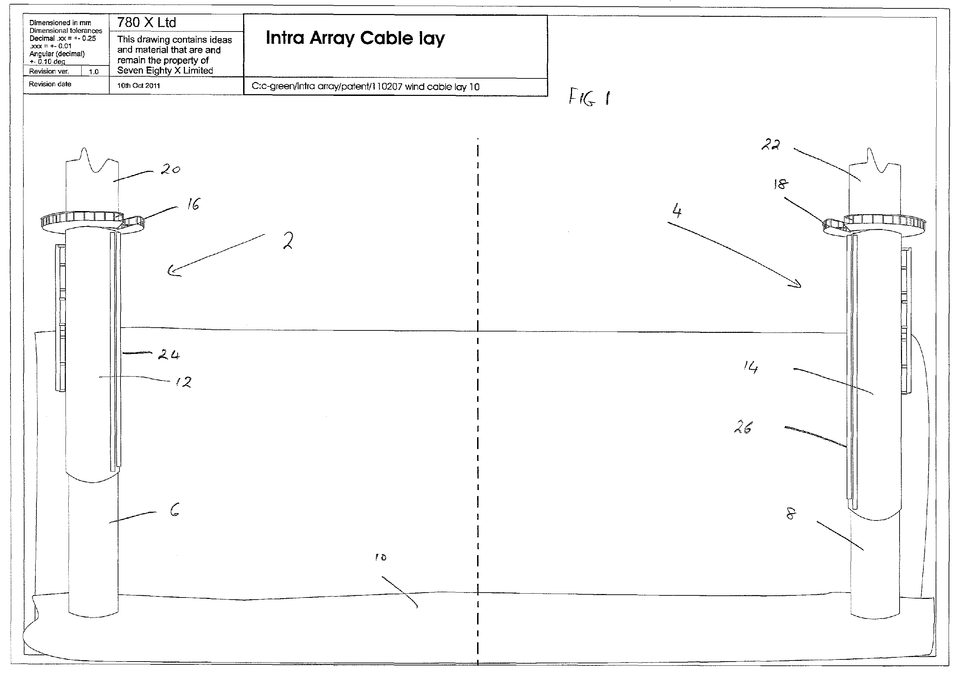

Referring to Figure 1, a pair of adjacently located wind turbine supports 2, 4 comprise respective foundations 6, 8 embodied in the seabed 10 and respective transition pieces 12, 14 mounted to the respective foundations 6, 8 and to which turbines (not shown) are subsequently mounted. The supports 2, 4 have respective platforms 16, 18 and bases of respective turbine towers 20, 22, and a respective set of runners 24, 26, the purpose of which will be described in greater detail below, is mounted to the external surface of each transition piece 12, 14.

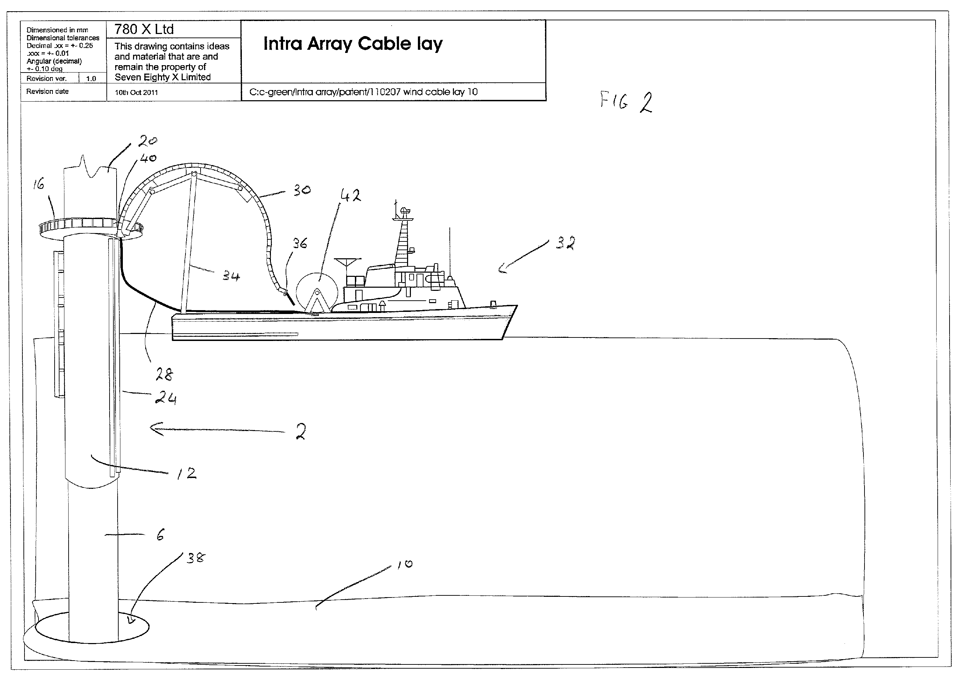

Referring to Figure 2, an electrical power cable 28 to which a flexible, modular, tubular cable protection apparatus 30 embodying the present invention has been mounted is mounted to the external surface of the support 2 by means of a cable lay vessel 32 having a heave, roll and pitch compensated guide platform 34. As will be described in greater detail below, the cable protection apparatus 30 is preassembled around the power cable 28 and clamped onto the cable 28 at a top hat 36 adjacent the free end of the cable 28. As will be appreciated by persons skilled in the art, the vessel 32 is capable of being dynamically positioned to maintain its location relative to the turbine support 2.

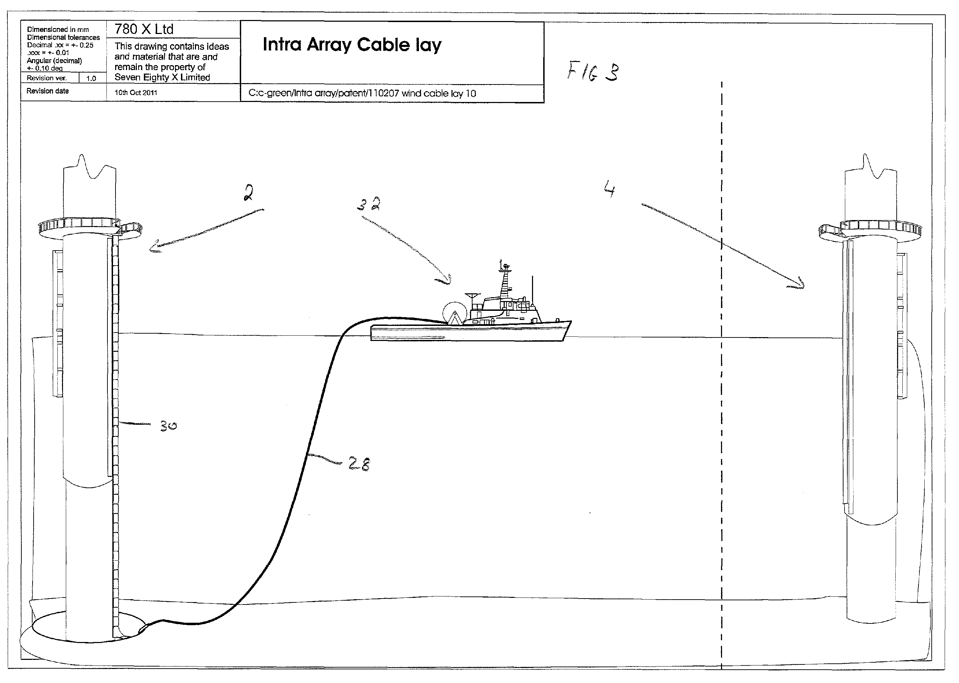

The guide platform 34 engages the turbine support 2 at or near the platform 16 to cause the cable protection apparatus 30 to be slidably located on the runners 24. Prior to this operation, the base of the turbine support 2 and its surrounding area 38 is surveyed by means of sonar or other appropriate means to determine the exact distance from a top hat hang off point 40 on the transition piece 12 adjacent the platform 16 to the seabed 10 to determine the length of flexible cable protection tube 30 required and the amount of additional seabed based cable protection (described in greater detail below) which will be required. The cable protection apparatus 30 and cable 28 are then fed down the runners 24 until the top hat 36 engages with top hat hang off point 40 on the transition piece 12. The vessel 32 then plays out cable 28 from a drum 42 or other cable storage means and lays the cable 28 to the next turbine support 4 location along the sea floor 10 as shown in Figure 3.

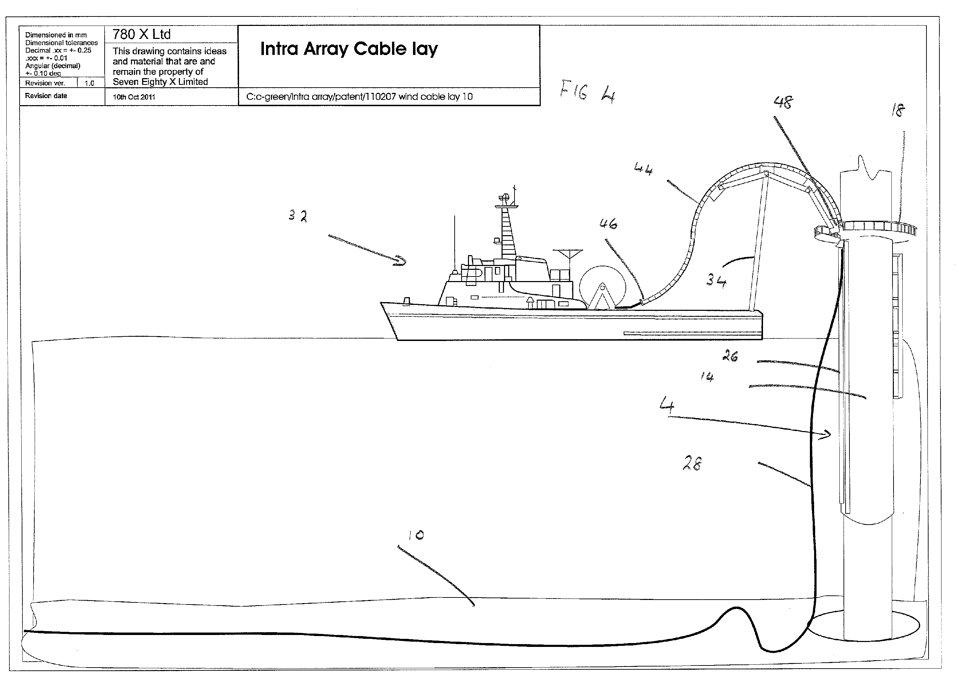

Referring to Figure 4, the vessel 32 then relocates to the second turbine support 4 where the distance from the platform 18 to the seabed 10 has been pre-surveyed. A second cable protection apparatus 44 of similar construction to the first cable protection apparatus 30 is assembled around the power cable 28 but is not secured at the top hat 36, so that the cable 28 can move longitudinally relative to the cable protection apparatus 44. The guide platform 34 is deployed to engage the cable protection apparatus 44 to the runners 26 on the external surface of the second support 4, and the cable protection apparatus 44 is passed down the runners 26 and over the cable 28 until the top hat 46 of the cable protection tube 44 engages the top hat hang off location 48 on the transition piece 14 of the second support 4. The cable 28 is then cut by suitable means which will be familiar to persons skilled in the art, leaving sufficient slack for the cable 28 to pass into the transition piece 14 and connect to switchgear (not shown) in a protected environment, and the spare cable is laid onto the platform 18. The cable 28 is then mechanically connected to the top hat 46. It will therefore be seen that the cable handling operations requiring human invention are carried out above sea level.

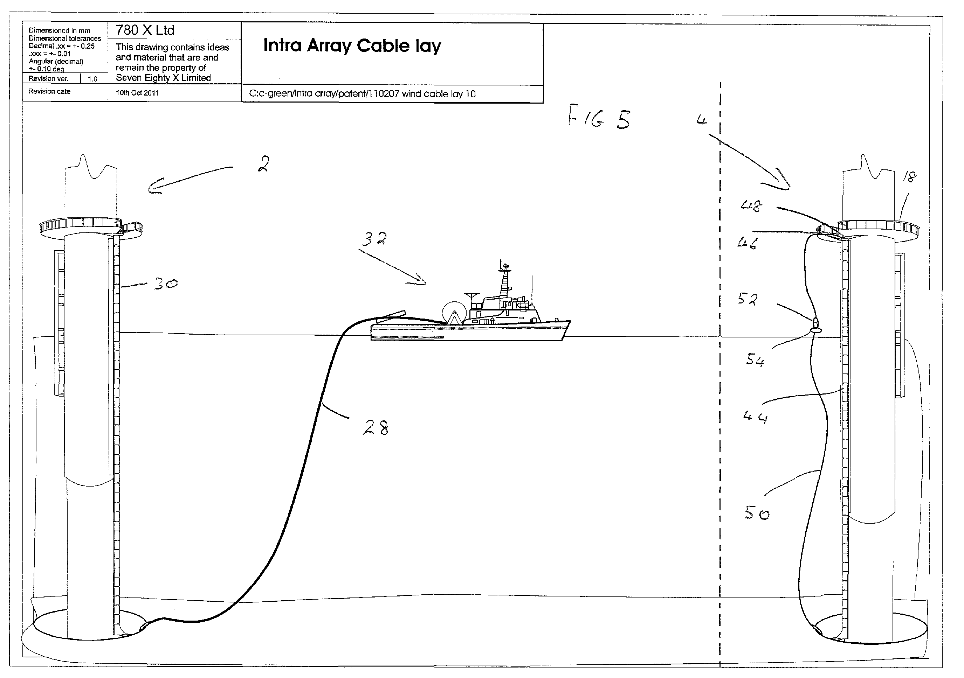

An alternative arrangement for installing the cable protection tube 44 to the second support 4 is described with reference to Figure 5. The process of mounting the cable 28 and first cable protection tube 30 to the first support 2 is as described with reference to Figures 1 to 3. The second modular cable protection tube 44 is mounted by the vessel 32 to the external surface of the second support 4 by means of the heave, roll and pitch compensated guide platform 34 such that the top hat 46 engages the top hat hang off point 48 on the transition piece 14. The second cable protection tube 44 has a pre-installed messenger wire 50, the ends 52, 54 of which are connected to each other. After laying the length of cable 28 along the sea floor 10 between the first 2 and second 4 turbine supports, the vessel 32 recovers the messenger wire 50 and separates its ends 52, 54. The power cable 28 is then cut at a predetermined length and attached by suitable means to the end 54 of the messenger wire 50. The vessel 32 then pulls the messenger wire 50 and attached cable 28 up through the second cable protection tube 44 via the extended guide platform 34. The spare cable is then placed around the platform 18 to await mechanical connection, routing and electrical connection.

Referring to Figures 6A to 6D, the installation of the lower part of the cable protection tube 30 is shown in greater detail. Referring to Figure 6A, the runners 24 extend to the base of the transition piece 12, which protrudes radially outwards from the foundation 6 and is generally located above the sea floor 10. Since the runners 24 are not present on the foundation 6, there is a vertical gap 56 (Figure 6B) from the base of the runners 24 to the sea floor 10, where the cable protection tube 30 is not secured. A lateral gap 58 (Figure 6B) also exists between the foundation 6 and the sea floor 10 associated with the variable scour 60 around the foundation 6. Exposure of the cable 28 in the vicinity of this gap 58 can cause cable fatigue and eventual cable failure as a result of wave and current action acting on the cable 28. Additional cable protection 62 is therefore used to protect the cable.

In the arrangement shown in Figure 6A, individual modules 64 of the flexible cable protection tube 30 that protrude from the base of the runners 24 remain vertically aligned and rigidly connected by means of an internal mechanism which will be described in greater detail below. A base region of the cable protection tube 30 has a transition piece 66 connected to lateral protection modules 68 which provide hard interconnected cable protection. Flexible rubber cable protection 70 is also provided in the form of a tapering rubber support attached to the cable protection modules 68. In the arrangement of Figure 6B, the entire cable protection tube 30 is lowered until the base region engages the sea floor 10.

Referring to Figure 6C, the individual modules 64 of the cable protection tube 30 are not vertically rigidly constrained and can therefore pivot relative to each other to a limited extent. As the cable protection tube 30 is lowered to the position shown in Figure 6D, this therefore enables a gentle curve towards the sea floor 10 to occur. In both of the arrangements shown, the cable 28 is taken from the turbine support 2 to a steady sea floor base 10 to allow subsequent post cable lay burial, thereby minimising the risk of free span movement of the cable 28, which in turn provides further protection to the cable 28 and minimises the risk of fatigue.

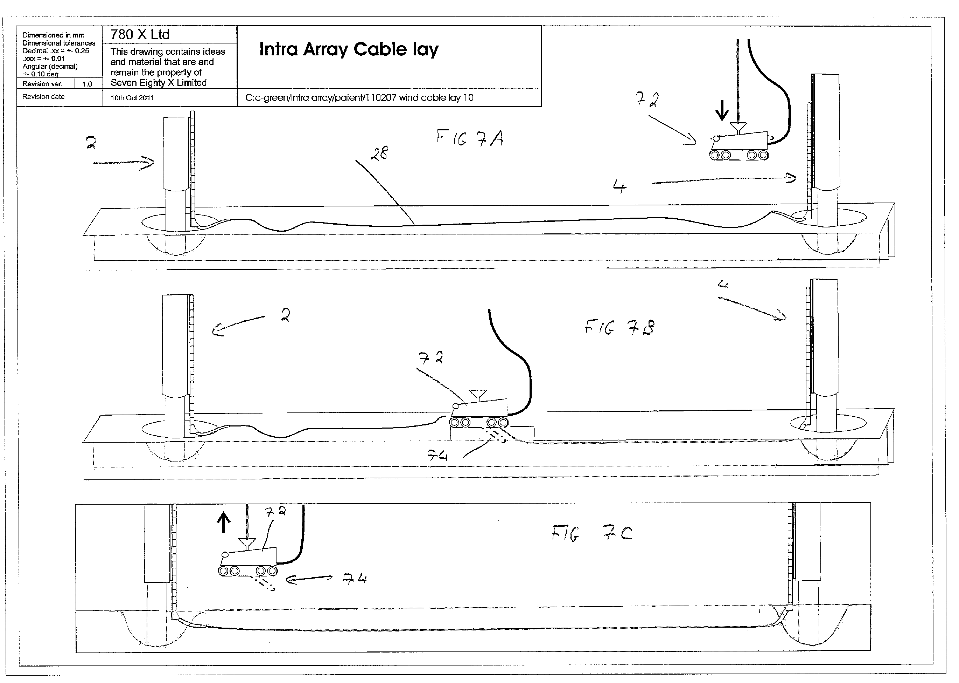

Referring to Figures 7A to 7C, a remotely operated vehicle (ROV) 72 is deployed from a surface vessel, which may be the cable deployment vessel 32, to complete burial of the length of cable 28 between the first 2 and second 4 support structures. The cable 28 may be buried by means of a suitable trenching mechanism 74 familiar to persons skilled in the art, and will therefore not be described in greater detail herein.

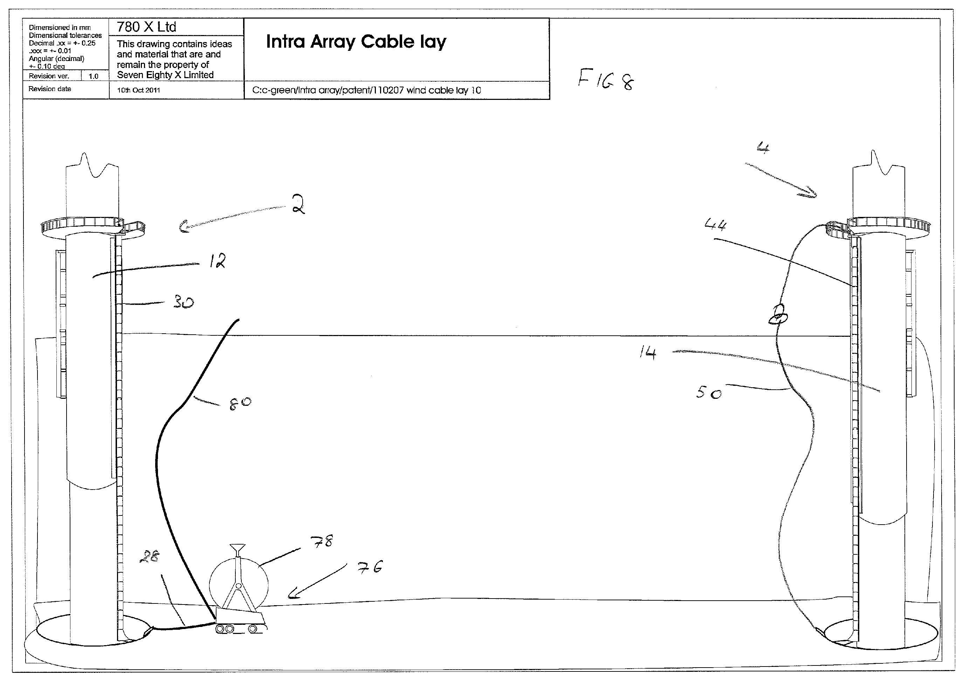

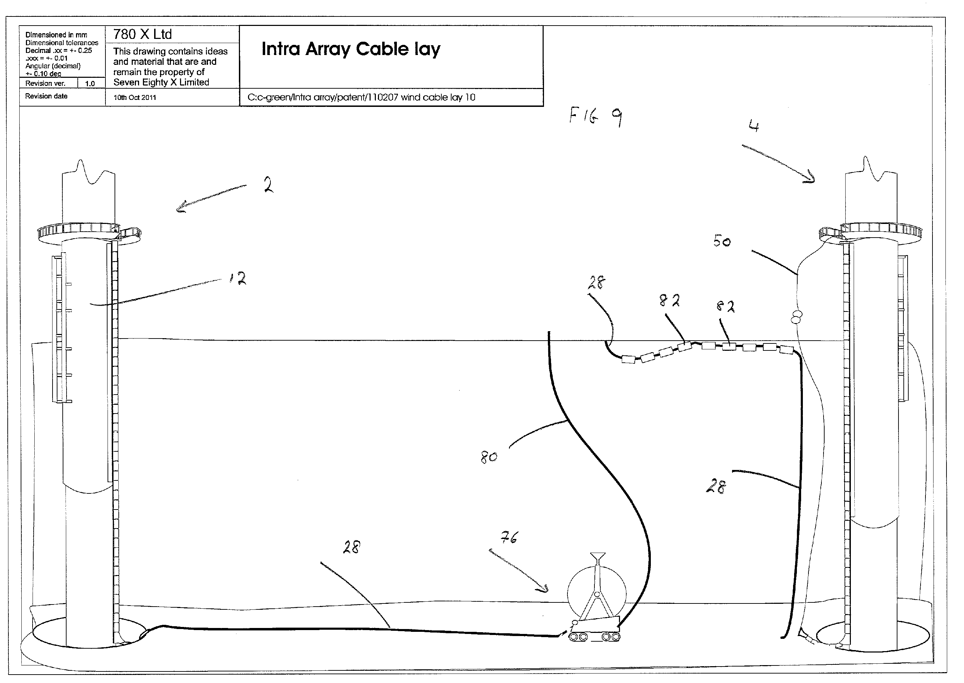

Referring to Figure 8, an alternative arrangement for laying the length of cable 28 between the first 2 and second 4 support structures is described. The cable protection tube 30 and cable 28 are mounted to the first support structure 2 as described with reference to Figures 1 to 3. An ROV 76 preloaded with a cable drum 78 and the cable 28 is then lowered to a position on the sea floor 12 adjacent the lower end of the cable protection tube 30. The ROV 76 is powered by means of a surface vessel (not shown) through an umbilical 80 and lays the cable 28 out to the second turbine support 4. As shown in Figure 9, the final section of the cable 28 is provided with a series of flotation devices 82 to ensure that the end of the cable 28 self surfaces. The ROV 76 then turns around and buries the cable 28 in a conventional cable lay operation. Alternatively, the cable 28 can be laid and buried in a single operation by the ROV 76. This arrangement provides the advantage that the transition piece 12, turbine and cable 28 can be installed at the same time from a single vessel which can remain in position during the transition piece installation and connection operations.

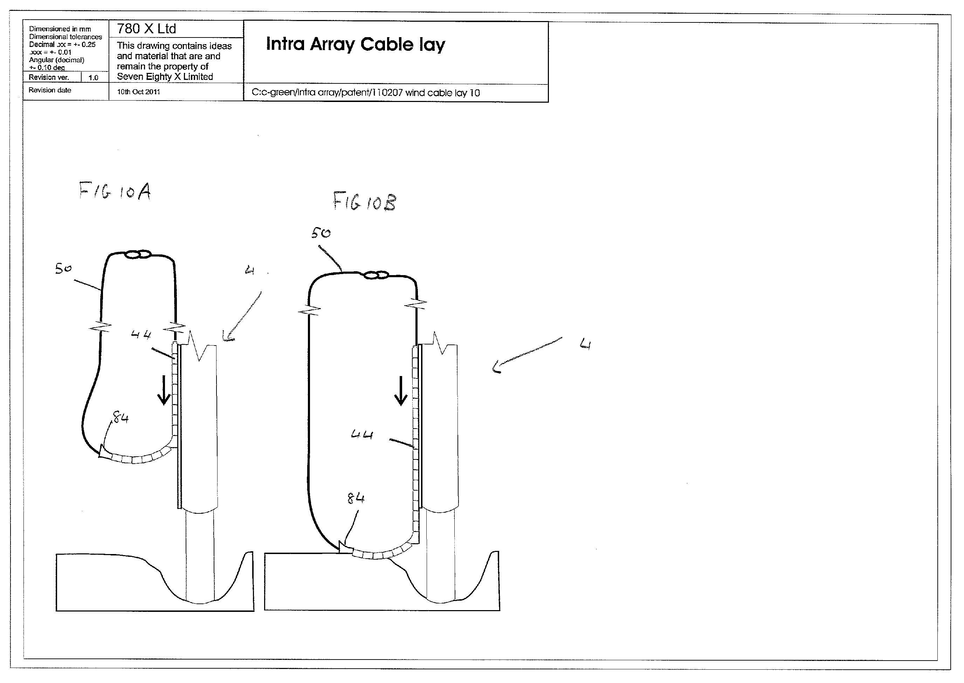

Referring to Figures 10A and 10B, the second support structure 4 having a cable protection tube 44 and messenger wire 50 pre-installed therein is disclosed. The lower end of the cable protection tube 44 has an extended bell mouth 84 to facilitate snag free introduction of the power cable 28 during the pulling operation.

Referring to Figures 11A to 11I, the cable protection tube 30 of Figure 2 is shown in greater detail. The cable protection tube 30 has a plurality of interconnected first elements 64 wherein each element has a recess 86 and protrusion 88 capable of engaging a corresponding protrusion 88 and recess 86 on an adjacent element 64 such that pivoting of one element 64 relative to the adjacent element 64 is limited. This therefore provides a longitudinal channel for accommodating the cable 28 such that bending of the cable 28 around a bend radius less than a predetermined minimum bend radius is prevented.

Each of the elements 64 comprises a main body 90 forming a channel 92 for accommodating the cable 28 and a back plate 94 for closing the channel 92. The main body 90 also has a pair of grooves 96 in its external surface to allow slidable engagement of the element 64 with the pair of runners 24 on the external surface of the turbine support 2. The main body 90 is formed from a hard wearing corrosion resistant material such as polycarbonate, polyethylene, glass reinforced polyurethane, polyurethane, glass reinforced plastic, aluminium or other materials which may be familiar to persons skilled in the art.

The back plate 94 comprises an outer shell 98 for mounting in the channel 92 after the cable 28 has been received in the channel 92 in the main body 90, and a slide down lock plate 100 arranged to move downwards under gravity when adjacent back plate modules are vertically aligned, such that the lock plate 100 of a module can be located in a corresponding compartment in the module below. The lock plate 100 has a retaining knob 102 for engaging a bar 104 on the outer shell 98 of the back plate 94 to prevent the lock plate 100 from becoming separated from the back plate 94 prior to assembly. The back plate 94 also has a protrusion 106 and a recess 108 for engaging corresponding recesses 108 and protrusions 106 on adjacent back plates 94 to form part of the respective protrusions 88 and recesses 86 of the elements 64 of the guide protection tube 30.

Referring to Figures 12A and 12B, a top hat element 36 is a modified element of the cable protection tube 30 for enabling the cable protection tube 30 to be secured to a fixed location on the transition piece 12 and the cable 28 to be secured to the top of the cable protection tube 30 and to be electrically connected to the turbine supported by the turbine support 2. A body 110 of the top hat module 36 engages the adjacent standard body 90 and surrounds the cable 28. A modified back plate element 112 is inserted into the body 110 by means of lugs 114 received by mating holes (not shown) in the body 110 and the back plate 112 is then rotated into position such that its external surface is flush with that of the body 110. A base plate 116 is then positioned on top of the combined body 110 and back plate 112 and secured in position by means of suitable bolts 118 which fit into bolt holes. The cable protection tube 30 is then assembled around the cable 28 and outer armouring 120 of the cable 28 is stripped back to a desired length. A cover plate 122 is then secured over the base plate 116 to clamp the armouring 120 between the base plate 116 and cover plate 122 such that the cable protection tube 30 is locked in position relative to the cable 28.

Referring now to Figure 13, when the cable protection tube 30 has been installed on the transition piece 12 of the turbine support 2, the top hat 36 abuts a top hat hang off platform 40 on the transition piece 12. The top hat 36 can then be secured against the top hat hang off platform 40 to prevent any subsequent movement and fully secure the cable protection tube 30 and cable 28 to the turbine support 2. The inner cable, from which the outer protective armouring 120 has been removed, can now be routed to its location via suitable routing means to its location within the transition piece 12 for onward electrical connection.

Referring to Figure 14, seabed protection modules 68 comprise non-identical clamshell halves which mate around the cable 28 and connect to each other via cooperating protrusions and recesses sequentially to form a variable length span 62. The protection modules 68 can pivot to a limited extent relative to each other. An additional cable protection element 70, such as a tapering rubber tube or bend stiffener, is mounted to the end of the span 62 remote from the cable protection tube 30. The opposite end of the span 62 is received in transition piece 66 by means of cooperating protrusions and recesses, and the transition piece 66 forms the base of the cable protection tube 30, i.e. its lowest module having external slots 124 which mate with the runners 24 on the transition piece 12. The transition piece 12 is provided with an internal channel 126 having a suitable bend radius to bend the cable 28 in a controlled manner through a gentle curve away from the base of the turbine support 2. It will be appreciated by persons skilled in the art that assembly of the full cable protection tube 30 is carried out on board a vessel 32 prior to installation but subsequent to site survey to determine the precise vertical length and lateral length of cable protection 30, 62 required.

Referring to Figure 15, assembly of the invention is typically started for a new cable 28 from a cable drum 128 following the survey by laying out sufficient cable 28 including slack for routing from the seabed 10 to the transition piece 12 safe housing area onto a circular or u-shaped table 130 on the deck of the vessel 32. Working backwards from the seabed cable protection span modules 68, the cable protection units 68, 64 are progressively located around the cable 28 as required and fitted together to form the interlocking cable protection tube 30. The tube 30 is then completed and secured by fitting of the top hat 36, and the cable 28 and cable protection tube 30 can then be lifted via handling equipment on to the vessel back deck for onward mounting on to the runners 24 on the external surface of the turbine support 2. Similarly, a cable protection tube 44 having all appropriate end units, top hat 46 and an internal messenger wire 50 can be assembled and then fitted to the second turbine support 4 in advance of fitting the cable protection tube 30 and cable 28 on to the first turbine support 2 and laying of cable 28 towards the second turbine support 4. This then facilitates pull through of subsequently laid cable into the preinstalled second cable protection tube 44.

The modular units 64 forming the cable protection tube 30 retain limited flexibility until they are installed, to ensure easier handling. However, once installed, the locking plates 100 interconnect to form a vertical spine to ensure that the cable protection tube 30 remains rigid and vertical. A clip 132 (Figures 11H, I) or other suitable retaining means can be used to prevent accidental movement of the locking plate prior 100 to installation, such that installation triggers release of the locking plate 100.

It will be appreciated by persons skilled in the art that the above embodiments have been described by way of example only and not in any limitative sense, and that various alterations and modifications are possible without departure from the scope of the invention as defined by the appended claims.

## Claims

1. A method of mounting an electrical cable to a support structure of a first offshore electricity generating apparatus, the method comprising:-
mounting a first cable protection apparatus to an external surface of said support structure, wherein said first cable protection apparatus comprises a plurality of first elements interconnected to define a channel for receiving a cable, wherein each said first element is prevented from pivoting through more than a predetermined angle relative to a further said first element attached thereto; and
mounting said first cable protection apparatus to an electrical cable such that said cable protection apparatus prevents said cable being bent around a bend radius smaller than a predetermined minimum bend radius and said cable protrudes from a lower end of first cable protection apparatus when mounted to said support structure.

2. A method according to claim 1, including one or more of the following features:
(i) wherein at least one said first cable protection apparatus is fixed to said cable at at least one location along the length of said cable;
(ii) wherein the step of mounting the first cable protection apparatus to the cable comprises mounting an end of the cable to a guide member located in said channel of the first cable 24 protection apparatus and pulling the cable into the first cable protection apparatus by means of the guide member;
(iii) wherein the step of mounting the first cable protection apparatus to the cable is carried out subsequently to mounting of the first cable protection apparatus to the external surface of the support structure;
(iv) wherein the step of mounting the first cable protection apparatus to an external service of said support structure comprises mounting said first cable protection apparatus to locating means provided on the external surface of the support structure; or
(v) further comprising mounting at least one second cable protection apparatus to an end of said first cable protection apparatus, wherein said second cable protection apparatus is adapted to extend from a lower end of the first cable protection apparatus when mounted to said support structure and prevent said cable being bent around a bend radius smaller than a predetermined minimum bend radius.

3. A method according to claim 2, wherein said locating means comprises at least one elongate member for slidably receiving the cable protection apparatus.

4. A method according to claim 2, further comprising moving said first cable protection apparatus and said second cable protection apparatus relative to said support structure such that said second cable protection apparatus engages the sea floor.

5. A method according to any one of the preceding claims, further comprising mounting at least one third cable protection apparatus to a second support structure such that said cable protrudes from a lower end of said third cable protection apparatus, and laying a length of said cable on the sea floor between said first and second support structures.

6. A method according to claim 5, further comprising burying said length of cable.

7. A method according to claim 5 or 6, wherein the step of laying a length of said cable on the sea floor between said first and second support structures comprises lowering a remotely operated vehicle to the sea floor, and laying said length of cable by means of said remotely operated vehicle.

8. A method according to any one of the preceding claims, further comprising mounting at least one flotation device to an end of said cable.

9. A cable protection apparatus comprising:-
a plurality of first elements adapted to be interconnected to define a channel for receiving a cable and such that relative angular movement of each said first element relative to the or each said further first element connected thereto is limited; and
closure means for closing said channel with said cable therein.

10. An apparatus according to claim 9, including one or more of the following features:
(i) further comprising engaging means for engaging locating means on an external surface of a support structure of an offshore wind generating apparatus;
(ii) wherein at least one said first element comprises at least one respective protrusion for engaging a respective recess on a further said first element, and at least one respective recess for engaging a respective protrusion on a further said first element, wherein engagement of said protrusion and/or recess with a corresponding said recess and/or protrusion limits pivoting movement of said first element relative to a said further first element;
(iii) wherein said closure means comprises a plurality of second elements adapted to be interconnected wherein each said second element is adapted to engage a respective said first element; or
(iv) further comprising clamping means for clamping armour of a cable therebetween to secure the cable relative to the apparatus.

11. An apparatus according to claim 10, wherein said closure means further comprises stiffening means adapted to resist pivoting of at least one said second element relative to at least one further said second element connected thereto when said second element and said further second element are vertically aligned with each other.

12. An apparatus according to claim 11, wherein said stiffening means comprises a plurality of third elements wherein each said third element is movably mounted to a respective said second element between a respective first position, in which said third element allows pivoting movement of said second element relative to a further said second element connected thereto, and a respective second position, in which said third element engages said second element and said further second element to prevent pivoting movement of said second element relative to said further second element.

13. An apparatus according to any one of claims 10 to 12, wherein at least one said second element comprises at least one respective protrusion for engaging a respective recess on a further said second element, and at least one respective recess for engaging a respective protrusion on a further said second element, wherein engagement of said protrusion and/or recess with a corresponding said recess and/or protrusion limits pivoting movement of said second element relative to a said further second element.
